Europäisches Patentamt

European Patent Office

Office européen des brevets

(11) Veröffentlichungsnummer: **0 512 204 A2**

# EUROPÄISCHE PATENTANMELDUNG

(21) Anmeldenummer: **92102917.9**

(51) Int. Cl.⁵: **G01N 21/33**, G01J 3/42

(22) Anmeldetag: **21.02.92**

(30) Priorität: **02.05.91 DE 4114276**

(43) Veröffentlichungstag der Anmeldung:
**11.11.92 Patentblatt 92/46**

(84) Benannte Vertragsstaaten:
**AT BE CH DE DK ES FR GB GR IT LI LU NL SE**

(71) Anmelder: **SPECTRO ANALYTICAL
INSTRUMENTS Gesellschaft für analytische
Messgeräte MbH
Boschstrasse 10
W-4190 Kleve(DE)**

(72) Erfinder: **Falk, Heinz, Prof. Dr.
Falkenweg 5
W-4190 Kleve(DE)**
Erfinder: **Thissen, Ludger, Dipl.-Ing.
Schwanenkamp 3
W-4194 Bedburg-Hau(DE)**

(74) Vertreter: **Patentanwaltsbüro Cohausz &
Florack
Schumannstrasse 97
W-4000 Düsseldorf 1(DE)**

(54) **Gasgefülltes UV-Spektrometer.**

(57) Die Erfindung betrifft ein UV-Spektrometer für die Messung von spektralen Intensitäten im Wellenlängenbereich unter 190 nm, gekennzeichnet durch einen gasdichten Spektrometerbehälter mit optischen Fenstern, gefüllt mit einem UV-transparentem Gas, wobei Sorptionsmittel derart ausgebildet und angeordnet sind, daß sie die Meßstrahlung im Spektrometer absorbierende Restgase binden.

Fig. 1

EP 0 512 204 A2

Die Erfindung betrifft ein UV-Spektrometer für die Messung von spektralen Intensitäten im Wellenlängenbereich unter 190 nm.

Die Vorrichtung zur Gasspülung soll einen minimalen Gasverbrauch gewährleisten, die Bildung von absorbierenden Niederschlägen auf optischen Fenstern, insbesondere auf der Strahlungs-Eintrittsseite, verhindern und den Partialdruck von absorbierenden Restgasbestandteilen vernachlässigbar klein halten. Darüber hinaus sollen durch die erfindungsgemäße Vorrichtung über einen großen Zeitraum stabile Meßergebnisse erreicht werden.

Aufgrund der optischen Absorption von Strahlung im Wellenlängenbereich unterhalb 190 nm durch Bestandteile der Luft werden Spektrometer in Vakuumgefäßen bei einem Restgasdruck unterhalb 0,01 mbar betrieben. Gegenüber üblichen Spektrometern ist damit ein erheblicher technischer Aufwand verbunden.

Es ist bekannt, daß für Spektralbereich des sogenannten Vakuum-UV anstelle der Evakuierung des Spektrometers auf Drucke im Bereich unterhalb 0,1 mbar UV-transparente Spülgase verwendet werden. Die bekannten Systeme der Gasspülung beruhen auf einem relativ hohen Gasdurchfluß im Bereich von 30 - 300 l/h (US-Patent N. 4,322,165), wobei das verwendete Gas eine sehr hohe Reinheit haben muß. Ähnliche Durchflußsysteme mit einem Gasverbrauch von 5 - 10 l/h sind aus Publikationen bekannt. (T.Nakahara und T. Wasa, Applied Spectroscopy, Vol. 41, 1238, 1978; T. Nakahara, Spectrochim. Acta, Vol. 40B, 293, 1985).

Der hohe Gasdurchfluß ist erforderlich, um durch Desorption und Leckage auftretende Restgase auf einem hinreichend niedrigen Partialdruck zu halten. Die Gasbereitstellung für die Spülung erschwert die praktische Handhabung der Geräte aufgrund voluminöser Druckgasflaschen und ist mit erheblichen Kosten verbunden.

Bei den bekannten Vakuumspektrometern treten infolge Dissoziation der im Spektrometergefäß enthaltenen Restgase absorbierende Niederschläge auf UV-bestrahlten optischen Fenstern und anderen optischen Flächen auf. Dadurch wird die Stabilität spektrometrischer Messungen eingeschränkt und ein erheblicher Wartungsaufwand bewirkt. Ein zusätzlicher Nachteil dieser Vakuumspektrometer ist der relativ hohe technische Aufwand zur Erreichung des erforderlichen Feinvakuums.

Bekannte gasgespülte Spektrometer besitzen einen relativ hohen Gasverbrauch von 50 - 100 N cbm pro Jahr und ihr Justierzustand hängt vom äußeren Luftdruck ab.

Aufgabe der Erfindung ist es, einen UV-Spektrometer zu schaffen, in dem eine konstante Dichte eines UV-transparenten Gases bei minimalem Gasverbrauch aufrechterhalten wird.

Die Aufgabe wird erfindungsgemäß dadurch gelöst, daß Sorptionsmittel derart ausgebildet und angeordnet sind, daß sie die Meßstrahlung im Spektrometer absorbierende Restgase binden.

Hierbei wird das in einem gasdichten Gefäß befindliche Spektrometer bei konstantem Gasdruck, welcher vorzugsweise einige 10 mbar oberhalb des äußeren Druckes liegt, betrieben. Auftretende, die zu messende Strahlung absorbierende Restgase werden mit Hilfe von Sorptionsstoffen gebunden. Letzteres kann sowohl durch Einbringung dieser Stoffe in den Spektrometerbehälter als auch durch Umpumpen der Gasfüllung über eine Umwälzpumpe und im Pumpkreise eingebrachter Durchfluß-Sorptionszelle erreicht werden. Als Sorptionsmittel können auf Chemiesorption, Adsorption oder elektrochemischen Reaktionen beruhende Zellen verwendet werden. Durch Verwendung eines Druckregelsystems, bestehend aus Druckmesser, Regelelektronik, elektrisch betriebenem Ventil und einem Vorratsgefäß, kann der Spülgasdruck im Spektrometerbehälter innerhalb enger Grenzen konstant gehalten werden. Somit sind sowohl Einflüsse des äußeren Luftdrucks als auch mögliche Druckänderungen durch Temperaturschwankungen auf den Justierzustand des Spektrometers ausgeschlossen.

Da alle Bauteile des Spektrometers im Betrieb unter Atmosphärendruck stehen, wird ein Ausgasen und damit verbundene Verschmutzung optischer Bauteile auf ein Minimum reduziert. Der Überdruck im Spektrometerbehälters gewährleistet, daß Leckagen nicht zum Eindringen von optisch absorbierenden Bestandteilen der umgebenden Atmosphäre in das System führen können. Das erfindungsgemäße Druckregelsystem reduziert den Gasverbrauch der Anlage auf sehr geringe Werte, so daß z.B. eine Gasmenge von kleiner als 50 Nl pro Jahr für den Betrieb des Spektrometers ausreicht. Somit ist das Gerät als praktisch autonom bezüglich Ersatz des Spülgases zu betrachten.

Der wiederholte Durchlauf des Spülgases durch die Reinigungszelle führt zu einer weitgehenden Entgasung von Oberflächen- und Einbauteilen innerhalb des Vakuumgefäßes, so daß eine maximale optische Transmission auch im Bereich unterhalb 180 nm erreicht werden kann.

Vorteilhafte Ausgestaltungen der Erfindung sind in den Unteransprüchen aufgeführt. Ein Ausführungsbeispiel der Erfindung ist nachfolgend dargestellt und näher beschrieben:

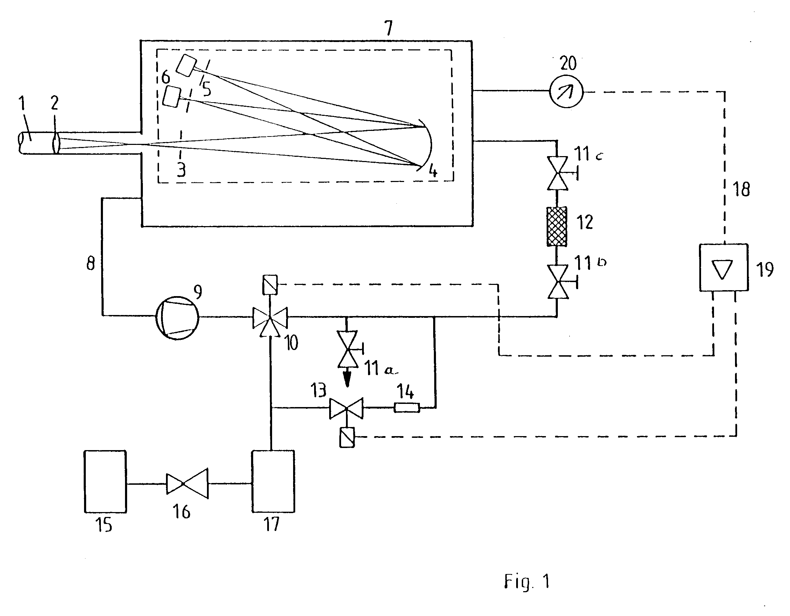

In Figur 1 ist ein Ausführungsbeispiel der erfindungsgemäßen Vorrichtung mit Gasdruck-Regulierung und Gasnachfüll-Vorrichtung unter Verwendung eines UV-Polychromators dargestellt. Figur 1 sei nachfolgend erläutert.

Das in einem gasdichten Behälter (7) befindliche optische System (1) bestehend aus Eintrittsrohr 1, als Eintrittsfenster dienende Abbildungslinse 2, Eintrittsspalt 3, Beugungsgitter 4, Austrittsspalt 5 und Strahlungsempfänger 6. wird mittels der Membranpumpe (9) über die Gasleitung (8) bei geöffnetem Durchgangsventil (11a) evakuiert. Die Reinigungszelle (12) ist durch Schließen der Durchgangsventile (11b + 11c) abgesperrt. Ebenso ist das Durchgangsventil (13) geschlossen. Nach Erreichen eines ausreichend niedrigen Restgasdruckes wird bei abgeschalteter Pumpe der Spektrometerbehälter (7) vom Versorgungsbehälter (15) durch Öffnen des Ventils (13) mit Gas gefüllt. Um einen niedrigen Partialdruckes von Restgasbestandteilen zu erzielen, kann das Auspumpen und anschließendes Füllen des Spektrometerbehälters wiederholt werden.

Zur Erreichung eines definierten Überdrucks des UV-transparenten Spülgases innerhalb des Spektrometerbehälters (7) wird mittels des Druckmessers (20) über die elektronische Steuereinrichtung (19) das Ventil (13) bis zur Erreichung des Solldruckes geöffnet. Während der Zuführung des Füllgases wird mittels der Pumpe (9) und Stellung des Dreiwegeventils (10) in Richtung auf die Reinigungszelle (12) das Füllgas umgewälzt. Die Pumpe (9) bleibt auch während des Betriebes des Spektrometers eingeschaltet, so daß mittels der Reinigungszelle (12) desorbierte Restgasbestandteile entfernt werden. Die Reinigungszelle (12) kann z.B. Kupferoxyd auf Silicagelträger und geeignete Molekularsieb-Adsorber als Granulate enthalten.

Treten infolge von Undichtigkeiten der Apparatur Gasverluste ein, so daß der Druck unter einen vorgegebenen Sollwert sinkt, so wird durch Öffnen des Ventils (13) über die elektronische Steuereinrichtung (19) Gas nachgefüllt.

Temperaturänderungen des Spektrometerbehälters führen zu einer Druckerhöhung im System. Diese kann zu Änderungen des Justierzustandes des Spektrometers führen. Deshalb wird der Druck im Spektrometerbehälters unterhalb einer vorgewählten Grenze gehalten, indem bei Druckanstieg das Dreiwegeventil (10) in Richtung auf den Vorratsbehälter (17) geöffnet wird. Ventil (13) ist dabei geschlossen. Diese Stellung des Dreiwegeventils (10) wird so lange aufrechterhalten, bis der entstandene Gasüberschuß in den Vorratsbehälter (17) gepumpt wurde. Danach wird durch Umschaltung des Dreiwegeventils (10) wieder zum Gas-Umwälz-betrieb umgeschaltet. Beim Temperaturerniedri-gung tritt wie oben bereits erwähnt Gas aus dem Vorratsbehälter über Ventil (13) in die Anlage ein. Der Strömungswiderstand (14) sorgt für stetige Druckänderungen. Durch das Regulierventil (16) wird im Vorratsgefäß (17) stets ein Minimal-Überdruck aufrechterhalten, so daß auf diese Weise Gasverluste infolge Leckage ersetzt werden. Als Spülgase können je nach erforderlichem Spektralbereich Stickstoff, Argon oder Helium verwendet werden.

Die in Figur 1 dargestellte Anordnung kann vereinfacht werden, wenn eine Druckregulierung aufgrund der Eigenschaften des Spektrometers nicht erforderlich ist. In diesem Fall werden nur eine Umwälzpumpe und eine Reinigungsquelle im äußeren Gaskreis verwendet.

**Patentansprüche**

1. UV-Spektrometer für die Messung von spektralen Intensitäten im Wellenlängenbereich unter 190 nm, **gekennzeichnet durch** einen gasdichten Spektrometerbehälter mit optischen Fenstern, gefüllt mit einem UV-transparentem Gas, wobei Sorptionsmittel (12) derart ausgebildet und angeordnet sind, daß sie die Meßstrahlung im Spektrometer absorbierende Restgase binden.

2. UV-Spektrometer nach Anspruch 1, **dadurch gekennzeichnet,** daß eine Druckregelvorrichtung (8 bis 20) vorgesehen ist zur Aufrechterhaltung eines oberhalb des äußeren Luftdruk-kes liegenden, konstanten Druckes des Spülgases innerhalb des Spektometerbehälters (7).

3. UV-Spektrometer nach Anspruch 1 oder 2, **dadurch gekennzeichnet,** daß sich die Sorptionssubstanz in einem äußeren Gaskreislauf befindet, durch welchen mittels einer Umwälzpumpe (9) die im Spektrometergefäß (7) befindliche Gasmenge kontinuierlich umgepumpt wird und dabei die Sorptionssubstanz (12) vorhandene Restgase bindet.

4. UV-Spektrometer nach Anspruch 1 und 2, **da-durch gekennzeichnet,** daß der Gasumwälz-kreis Bestandteil einer Druckregelungsvorrich-tung ist, wobei der im Spektrometergefäß (7) herrschende Gasdruck messbar und in Abhängigkeit vom Messwert entweder ein Umsteuerventil (10) am Ausgang der Umwälzpumpe (9) auf einen Vorratsbehälter (17) schaltbar oder Gas aus dem Vorratsbehälter (17) über ein weiteres steuerbares Ventil (13) dem Umwälzkreis zuführbar ist.

5. UV-Spektrometer nach Anspruch 3, **dadurch gekennzeichnet,** daß auftretende Gasverluste durch Anschluß eines Gasversorgungsbehälters (15) über ein Druckregelventil (16) an besagten Vorratsbehälter (17) kompensierbar ist.

6. UV-Spektrometer nach Anspruch 1, **dadurch gekennzeichnet,** daß Sorptionsmittel für Restgase direkt in das Spektrometergefäß einbringbar sind.

7. UV-Spektrometer nach den Ansprüchen 1 bis 6, **dadurch gekennzeichnet,** daß zur Sorption von Restgasen eine elektrochemisch wirkende Gas-Verzehr-Zelle angeordnet ist.

8. UV-Spektrometer nach den Ansprüchen 1 bis 4 und 5 bis 8**, dadurch gekennzeichnet,** daß als Umwälzpumpe (9) eine Membranpumpe angeordnet ist.

9. Verfahren unter Verwendung eines UV-Spektrometers und einem der Ansprüche 1 bis 8, **dadurch gekennzeichnet,** daß die Füllung nach Belüftung des Spektrometers (7) durch wiederholtes teilweises Evakuieren mittels der Umwälzpumpe (9), anschließendes Füllen mit Spülgas und Entfernen des Restgases über das Sorptionsmittel (12) erfolgt.

Fig. 1